(19) Europäisches Patentamt / European Patent Office / Office européen des brevets

(11) **EP 4 755 854 A1**

(12) **EUROPEAN PATENT APPLICATION**
published in accordance with Art. 153(4) EPC

(43) Date of publication:
**10.06.2026 Bulletin 2026/24**

(21) Application number: **24849202.7**

(22) Date of filing: **31.07.2024**

(51) International Patent Classification (IPC):
**C02F 3/12** (2023.01)          **G06Q 50/06** (2024.01)

(52) Cooperative Patent Classification (CPC):
**C02F 3/12; G06Q 50/06;** Y02W 10/10

(86) International application number:
**PCT/JP2024/027312**

(87) International publication number:
**WO 2025/028557 (06.02.2025 Gazette 2025/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.08.2023 JP 2023126441**

(71) Applicants:
• **SUMITOMO CHEMICAL COMPANY, LIMITED**
  **Tokyo 103-6020 (JP)**
• **Kataoka Bio Laboratory Co., Ltd.**
  **Isehara-shi, Kanagawa 259-1115 (JP)**

(72) Inventors:
• **MAEDA, Daiki**
  **Osaka-shi, Osaka 554-8558 (JP)**
• **OKUDERA, Tomohiro**
  **Niihama-shi, Ehime 792-0015 (JP)**
• **KAWABATA, Ryota**
  **Niihama-shi, Ehime 792-0015 (JP)**
• **MAEDA, Ryosuke**
  **Isehara-shi, Kanagawa 259-1115 (JP)**

(74) Representative: **J A Kemp LLP**
  **80 Turnmill Street**
  **London EC1M 5QU (GB)**

(54) **COMPUTER PROGRAM, INFORMATION PROCESSING DEVICE, AND INFORMATION PROCESSING METHOD**

(57)    Provided are a computer program and the like capable of appropriately estimating information regarding a microbial agent to be used in a wastewater treatment system.

The computer program causes a computer to execute processing of: acquiring sludge image information related to a sludge image of a wastewater treatment system using an activated sludge method; and inputting the acquired sludge image information to a model, which outputs microbial agent information related to a microbial agent to be used in a wastewater treatment system when sludge image information of the wastewater treatment system is input, to output microbial agent information.

FIG. 5

EP 4 755 854 A1

## Description

Technical Field

The present invention relates to a computer program, an information processing apparatus, and an information processing method.

Background Art

Wastewater treatment systems using an activated sludge method are widely applied as treatment systems for public sewage or wastewater discharged from food factories, chemical factories, and the like. In the wastewater treatment system using the activated sludge method, wastewater to be treated is introduced into the treatment tank and subjected to an aeration treatment to supply oxygen to various types of aerobic microorganisms (activated sludge) present in the treatment tank. The organic pollutants contained in the wastewater in the treatment tank are decomposed by the action of aerobic microorganisms, thereby purifying the wastewater. Techniques for managing the operation of a wastewater treatment system using such an activated sludge method have been disclosed.

For example, Patent Literature 1 discloses a wastewater treatment system capable of maintaining the quality of treated water in a good condition by setting the amount of aeration by the aeration means to the target aeration amount when the target aeration amount calculated based on a treatment index value measured by a sensor exceeds the minimum aeration amount of the aeration means and by maintaining the amount of aeration by the aeration means at the target aeration amount and supplying raw water to an aerobic treatment tank using a water conveying means when the target aeration amount is equal to or less than the minimum aeration amount.

Citation List

Patent Literature:

Patent Literature 1: Japanese Patent Application Laid-Open No. 2018-103113

Summary

Technical Problems

However, the wastewater treatment system described in Patent Literature 1 has a problem in that it is not possible to estimate information regarding microbial agents to be used in the wastewater treatment system. In the wastewater treatment system using the activated sludge method, a microbial agent containing microorganisms is added in order to improve the quality of the wastewater. Since the quality or quantity of wastewater varies greatly depending on the season or the day, it is necessary to add a microbial agent that is appropriate for the condition of the wastewater. Conventionally, the conditions for adding the microbial agent have been adjusted based on the operator's experience, and this does not necessarily result in appropriate control.

It is an object of the present disclosure to provide a computer program and the like capable of appropriately estimating information regarding a microbial agent to be used in a wastewater treatment system.

Solution to Problems

A computer program according to one aspect of the present disclosure causes a computer to execute processing of: acquiring sludge image information related to a sludge image of a wastewater treatment system using an activated sludge method; and inputting the acquired sludge image information to a model, which outputs microbial agent information related to a microbial agent to be used in a wastewater treatment system when sludge image information of the wastewater treatment system is input, to output microbial agent information.

An information processing method according to one aspect of the present disclosure includes: deploying a model, which outputs microbial agent information related to a microbial agent to be used in a wastewater treatment system when sludge image information of the wastewater treatment system using an activated sludge method is input, to a computer that controls the wastewater treatment system; acquiring sludge image information related to a sludge image of the wastewater treatment system; and inputting the acquired sludge image information to the deployed model to output microbial agent information.

An information processing method according to one aspect of the present disclosure includes: deploying a model, which outputs microbial agent information related to a microbial agent to be used in a wastewater treatment system when sludge image information of the wastewater treatment system using an activated sludge method is input, to each of a plurality of computers that control each wastewater treatment system; collecting, from each of the plurality of computers, parameters of each model in each wastewater treatment system that have been adjusted based on a data group including sludge image information newly obtained in each wastewater treatment system and microbial agent information related to a microbial agent to be used in each wastewater treatment system; performing federated learning of the model based on the collected parameters of each model; and deploying the model after federated learning to each of the plurality of computers.

Advantageous Effects of Invention

According to the present disclosure, it is possible to appropriately estimate information regarding a microbial agent to be used in the wastewater treatment system.

Brief Description of Drawings

FIG. 1 is a schematic diagram of a management system according to a first embodiment.
FIG. 2 is a block diagram showing the configuration of an information processing apparatus.
FIG. 3 is a block diagram showing the configuration of a control device.
FIG. 4 is an explanatory diagram showing an overview of a learning model.
FIG. 5 is a flowchart showing an example of a processing procedure executed by the information processing apparatus.
FIG. 6 is an explanatory diagram showing an overview of a learning model according to a second embodiment.
FIG. 7 is a flowchart showing an example of a processing procedure executed by an information processing apparatus according to the second embodiment.
FIG. 8 is an explanatory diagram showing an overview of a learning model according to a third embodiment.
FIG. 9 is a flowchart showing an example of a processing procedure related to reinforcement learning executed by an information processing apparatus according to the third embodiment.
FIG. 10 is an explanatory diagram showing an overview of a learning model according to a fourth embodiment.
FIG. 11 is a diagram showing the configuration of a management system according to a fifth embodiment.
FIG. 12 is a flowchart showing an example of a processing procedure executed by the management system of the fifth embodiment.
FIG. 13 is a flowchart showing an example of a processing procedure executed by an information processing apparatus according to a sixth embodiment. Description of Embodiments

The present disclosure will be specifically described with reference to the diagrams showing embodiments thereof.

(First embodiment)

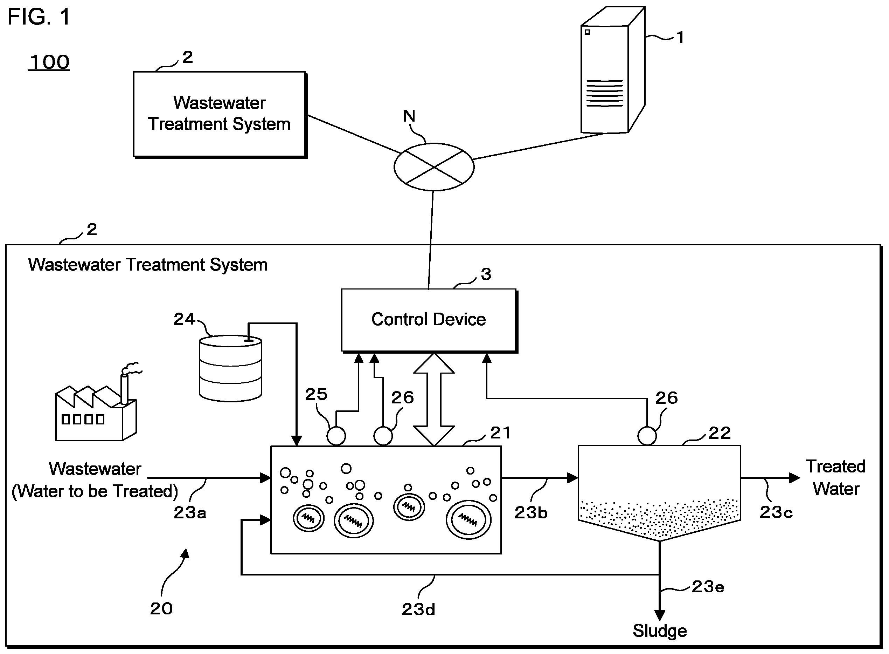

FIG. 1 is a schematic diagram of a management system 100 according to a first embodiment. The management system 100 includes an information processing apparatus 1 as a main apparatus. The information processing apparatus 1 is communicably connected to each of a plurality of wastewater treatment systems 2 through a network N such as the Internet. The wastewater treatment system 2 is a system for treating wastewater using an activated sludge method. The management system 100 according to the present embodiment optimizes the operation management of the wastewater treatment system 2. The number of wastewater treatment systems 2 may be one or three or more. The information processing apparatus 1 may be integrated into any of the wastewater treatment systems 2.

The information processing apparatus 1 is an apparatus capable of performing various kinds of information processing and transmitting and receiving information, and is, for example, a server computer, a personal computer, or a quantum computer. The information processing apparatus 1 is managed by, for example, a service provider of a management service provided by the management system 100. The information processing apparatus 1 estimates a microbial agent suitable for use in each wastewater treatment system 2 based on sludge image information that indicates the condition of activated sludge in wastewater in each wastewater treatment system 2. The information processing apparatus 1 provides information on the estimated microbial agent to the wastewater treatment system 2.

The wastewater treatment system 2 includes wastewater treatment equipment 20 that performs wastewater treatment using activated sludge and a control device 3 that controls the operation of the wastewater treatment equipment 20. The activated sludge used in the wastewater treatment equipment 20 is a complex microbial system and contains, for example, microorganisms such as bacteria, protozoa, and metazoa. The wastewater treated by the wastewater treatment system 2 contains organic pollutants. The wastewater is, for example, industrial wastewater or public sewage.

The wastewater treatment equipment 20 includes a treatment tank 21 and a sedimentation tank 22. Wastewater (water to be treated) flows into the treatment tank 21 through a water supply line 23a. A constant amount of wastewater may be continuously sent to the treatment tank 21.

The treatment tank 21 includes an aeration means (not shown), and the water to be treated is aerobically treated by using the activated sludge present in the treatment tank 21. Using gases (air) such as air or oxygen supplied by a blower (not shown), the treatment tank 21 diffuses the gas into the treatment tank 21 and aerates the activated sludge stored therein. The aerobic microorganisms in the activated sludge take up dissolved oxygen from the water and oxidatively decompose the organic pollutants in the water to be treated, which they have taken in as food. The water to be treated that has been treated in the treatment tank 21 is sent to the sedimentation tank 22 through a water supply line 23b.

The sedimentation tank 22 leaves the water to be treated, which is sent from the treatment tank 21, to stand for a predetermined period of time, so that the activated sludge is settled naturally. As a result, the water to be treated is separated into a supernatant and activated sludge by solid-liquid separation. The supernatant is discharged as treated water through a water supply line 23c. A part of the settled activated sludge is returned to the treatment tank 21 through a return line 30d and recirculated. The remaining activated sludge is extracted to the outside of the system, as excess sludge, through a line 23e. The excess sludge is dewatered or dried and then incinerated and disposed of, or is recycled as a soil conditioner, civil engineering and construction materials, and the like. In addition, the sedimentation tank 22 is not limited to the sedimentation tank type, and may be, for example, a membrane separation device or the like.

In the treatment tank 21, a camera 25 for imaging the wastewater containing activated sludge in the tank is provided. The camera 25 is an example of an imaging apparatus. The camera 25 may be a high-magnification camera capable of imaging various microorganisms contained in the activated sludge at high magnification. The camera 25 generates a sludge image showing the condition of the activated sludge. The sludge image is a still image or a moving image formed by a plurality of frames of still images. The installation position of the camera 25 is not limited to the treatment tank 21, but may be, for example, the sedimentation tank 22. A plurality of cameras 25 may be provided. The camera 25 is connected to the control device 3 by wire or wirelessly, and outputs the captured sludge image to the control device 3.

In the wastewater treatment equipment 20, a sensor 26 for detecting the condition of the wastewater treatment equipment 20 or the condition of wastewater and activated sludge in the wastewater treatment equipment 20 may further be provided. Examples of the sensor 26 include a thermometer that detects temperature, a flow meter that detects flow rate, a pH meter that detects pH, an ORP (Oxidation Reduction Potential) meter that detects ORP, a DO (Dissolved Oxygen) meter that detects DO concentration, an MLSS (Mixed Liquor Suspended Solids) meter that detects MLSS concentration, a TOC (Total Organic Carbon) meter that detects TOC, an ammonia meter that measures ammonia concentration, a nitrogen meter that measures nitrogen concentration, and a phosphorus meter that measures phosphorus concentration. A plurality of sensors 26 may be provided. The sensor 26 is connected to the control device 3 by wire or wirelessly, and outputs detection data obtained by detection to the control device 3.

In the wastewater treatment equipment 20, a tank 24 for storing a microbial agent containing microorganisms as added bacteria is further provided. The microbial agent stored in the tank 24 is continuously added to the treatment tank 21 in predetermined amounts using, for example, a pump (not shown). The form of the microbial agent is not limited to liquid, but may be, for example, a formulation or powder. The microbial agent may also be added in the sedimentation tank 22, the water supply lines 23a and 23b, or the return line 23d. The microbial agent may be added manually.

Examples of added bacteria contained in the microbial agent include sludge-decomposing bacteria, settleability-improving bacteria, malodorous substance-decomposing bacteria, and persistent substance-decomposing bacteria. The sludge-decomposing bacteria refer to bacteria having the ability to decompose activated sludge that leads to excess sludge. Since the addition of the sludge-decomposing bacteria reduces the generation rate of excess sludge, the effect of suppressing the generation of excess sludge (reducing excess sludge) is expected. The settleability-improving bacteria refers to bacteria having the effect of improving or maintaining the settleability of activated sludge. Since the addition of the settleability-improving bacteria enhances the settleability of activated sludge, the effect of promoting solid-liquid separation in the sedimentation tank 22 and improving the concentration of activated sludge returned to the treatment tank 21 is expected. The malodorous substance-decomposing bacteria refer to bacteria having the ability to decompose malodorous substances in wastewater. Since the addition of the malodorous substance-decomposing bacteria reduces odors in wastewater (treated water), the effect of improving water quality is expected. The persistent substance-decomposing bacteria refers to bacteria having the ability to decompose hardly decomposable substances in wastewater. Since the addition of the persistent substance-decomposing bacteria reduces the amount of persistent substances in wastewater (treated water), the effect of improving water quality is expected. The added bacteria may be used singly or in combination of two or more types. For example, the microbial agent may contain only sludge-decomposing bacteria X1, or may contain the sludge-decomposing bacteria X1, sludge-decomposing bacteria X2, and settleability-improving bacteria Y1.

The configuration of the wastewater treatment equipment 20 is an example and is not limited thereto. The wastewater treatment equipment 20 may include, for example, a pre-treatment tank, a sedimentation tank before treatment, and the like, which are provided before the treatment tank 21. The treatment tank 21 may be configured in a plurality of stages.

The control device 3 is, for example, a local computer installed in a factory including the wastewater treatment equipment 20. The control device 3 controls the operation of the wastewater treatment equipment 20 in accordance with the operating conditions set for the wastewater treatment equipment 20. In addition, the control device 3 receives sludge images captured by the camera 25 and detection data detected by the sensor 26, and transmits the received sludge images and detection data to the information processing apparatus 1. The control device 3 may be communicably connected to the information processing apparatus 1 through a relay device (not shown), such as a router or a gateway.

In this specification, the operating conditions include not only conditions that are directly set for the wastewater treatment equipment 20, but also conditions that are indirectly set in accordance with the directly set items. Examples of the operating conditions include the amount of dilution of raw water, the flow rate of wastewater flowing into the wastewater treatment equipment 20 (treatment flow rate), the total organic carbon amount of the wastewater, the amount of aeration in the treatment tank 21, the concentration of activated sludge suspended solids (hereinafter, also referred to as sludge concentration), the air flow rate, the blower rotation speed, the return flow rate in the sedimentation tank 22, the interface position, and the amount of sludge extracted.

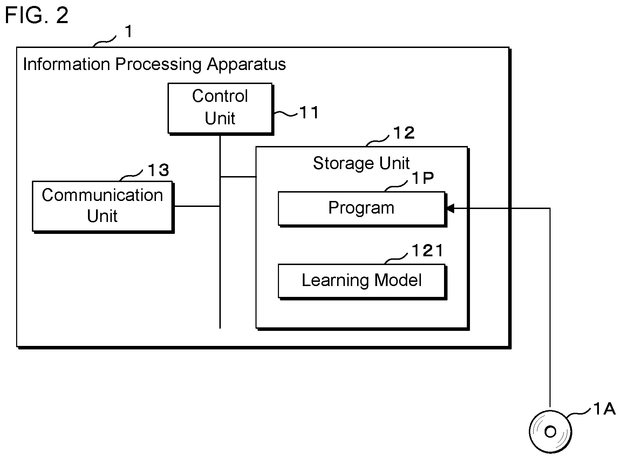

FIG. 2 is a block diagram showing the configuration of the information processing apparatus 1. The information processing apparatus 1 is a computer, and includes a control unit 11, a storage unit 12, and a communication unit 13. The information processing apparatus 1 may be a multi-computer including a plurality of computers, or may be a virtual machine virtually constructed by software.

The control unit 11 includes one or more arithmetic processing units such as a central processing unit (CPU) or a graphics processing unit (GPU). The control unit 11 controls each component by using a built-in memory such as a ROM (Read Only Memory) or a RAM (Random Access Memory), a clock, a counter, and the like, thereby executing processing. The functions of the information processing apparatus 1 may be realized by software, or some or all of the functions may be realized by hardware such as an ASIC (Application Specific Integrated Circuit) or an FPGA (Field Programmable Gate Array), for example.

The storage unit 12 includes a non-volatile memory such as a hard disk, a flash memory, or an SSD (Solid State Drive), for example. The storage unit 12 may be an external storage device connected to the information processing apparatus 1. The storage unit 12 stores various computer programs and data that the control unit 11 refers to. The storage unit 12 stores a computer program 1P for causing a computer to execute processing related to estimation of a microbial agent according to sludge image information and a learning model 121 necessary for executing the computer program 1P. The learning model 121 is a model generated by machine learning. The learning model 121 is expected to be used as a program module that configures a part of artificial intelligence software.

A computer program (computer program product) including the computer program 1P may be provided by a non-transitory recording medium 1A on which the computer program is recorded in a readable manner. The storage unit 12 stores a computer program read from the recording medium 1A by a reading device (not shown). The recording medium 1A is, for example, a magnetic disk, an optical disk, or a semiconductor memory. Alternatively, a computer program may be downloaded from an external server connected to the communication network and stored in the storage unit 12. The computer program 1P may be a single computer program or may be configured by a plurality of computer programs, and may be executed on a single computer or on a plurality of computers interconnected through a communications network.

The communication unit 13 includes a communication device to realize communication through the network N. The control unit 11 transmits and receives data to and from the control device 3 through the communication unit 13.

The configuration of the information processing apparatus 1 is not limited to the above example, and may include, for example, an operation unit for receiving the user's operation, a display unit for displaying images, and the like.

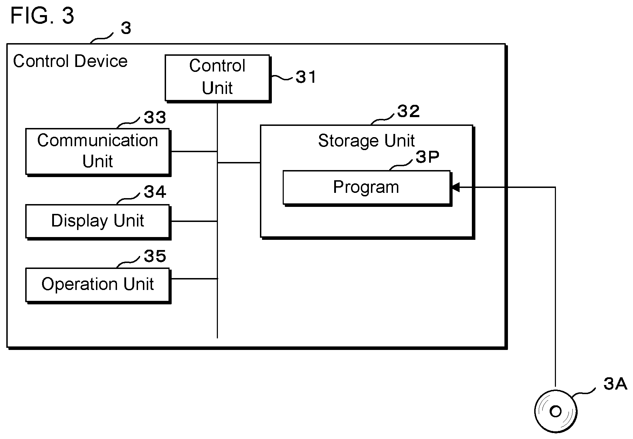

FIG. 3 is a block diagram showing the configuration of the control device 3. The control device 3 includes a control unit 31, a storage unit 32, a communication unit 33, a display unit 34, and an operation unit 35.

The control unit 31 includes one or more arithmetic processing units such as a CPU, an MPU, or a GPU. The control unit 31 controls each component by using a built-in memory such as a ROM or a RAM, a clock, a counter, and the like, thereby executing processing. The functions of the control device 3 may be realized by software, or some or all of the functions may be realized by hardware such as an ASIC or FPGA.

The storage unit 32 includes a non-volatile memory such as a hard disk, a flash memory, or an SSD, for example. The storage unit 32 stores various computer programs and data that the control unit 31 refers to. The storage unit 32 stores a computer program 3P for causing a computer to execute processing related to receiving the estimation results of the microbial agent.

A computer program (computer program product) including the computer program 3P may be provided by a non-transitory recording medium 3A on which the computer program is recorded in a readable manner. The storage unit 32 stores a computer program read from the recording medium 3A by a reading device (not shown). The recording medium 3A is, for example, a magnetic disk, an optical disk, or a semiconductor memory. Alternatively, a computer program may be downloaded from an external server connected to the communication network and stored in the storage unit 32. The computer program 3P may be a single computer program or may be configured by a plurality of computer programs, and may be executed on a single computer or on a plurality of computers interconnected through a communications network.

The communication unit 33 includes a communication device to realize communication through the network N. The control unit 31 transmits and receives data to and from the information processing apparatus 1 through the communication unit 33.

The display unit 34 includes a display device such as a liquid crystal display or an organic EL (Electro Luminescence) display. The display unit 34 displays the estimation results and the like received from the information processing apparatus 1 in accordance with instructions from the control unit 31.

The operation unit 35 is an interface for receiving the user's operation. The operation unit 35 includes, for example, a keyboard, a mouse, a touch panel device with a built-in display, a speaker, a microphone, and the like. The operation unit 35 receives an operation input from the user and transmits a control signal corresponding to the operation content to the control unit 31.

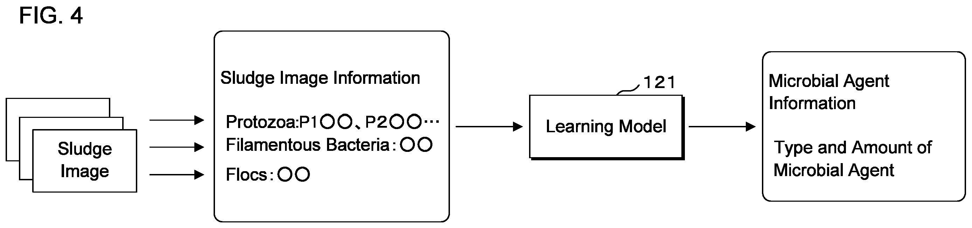

FIG. 4 is an explanatory diagram showing an overview of the learning model 121. The learning model 121 receives sludge image information related to sludge images of the wastewater treatment system 2 as its input, and outputs microbial agent information related to the microbial agent to be used in the wastewater treatment system 2. The learning model 121 is, for example, a neural network (NN). The learning model 121 of the present embodiment outputs, as microbial agent information, the type and amount of the microbial agent to be added.

The learning model 121 includes an input layer to which sludge image information is input, an output layer that outputs information indicating the type and amount of the microbial agent, and an intermediate layer (hidden layer) that extracts feature quantities. The intermediate layer may include a convolution layer, a pooling layer, a fully connected layer, and the like. The intermediate layer has a plurality of nodes to extract the feature quantities of input data, and pass the extracted feature quantities to the output layer using various parameters. When the sludge image information is input to the input layer, calculations are performed in the intermediate layer using the learned parameters, and output information indicating the type and amount of the microbial agent is output from the output layer.

The sludge image information input to the input layer of the learning model 121 is information regarding sludge images. The sludge image information of the present embodiment includes various feature quantities representing the condition of microorganisms in the sludge image. Here, the term "microorganisms" includes not only microorganisms themselves, such as bacteria and protozoa, but also aggregates of microorganisms, such as flocs.

In the example shown in FIG. 4, the sludge image information includes information indicating the condition of protozoa, the condition of filamentous bacteria, and the condition of flocs. The sludge image information may include color information. The condition of protozoa includes the type and number of protozoa contained in the sludge image. The condition of filamentous bacteria includes the number of filamentous bacteria contained in the sludge image. The condition of flocs includes the size and/or color of flocs contained in the sludge image.

The method for deriving the type and number of protozoa, the number of filamentous bacteria, and the size and color of flocs based on sludge images is not particularly limited. For example, various image analysis methods are used. By performing image analysis on the sludge image, protozoa, filamentous bacteria, and flocs contained in the sludge image can be extracted, and the type and number of protozoa, the number of filamentous bacteria, and the size of flocs can be specified based on the extraction results.

When extracting various microorganisms from the sludge image, different analysis methods may be used for each extraction target. For example, when the target is relatively large protozoa, the numbers of various protozoa can be derived by detecting protozoa of each type in the sludge image using an object detection model that receives a sludge image as its input and outputs the position and type of object (protozoan) in the sludge image. When the target is relatively small protozoa, the number of protozoa as moving objects in the sludge image may be calculated by detecting moving objects from time-series sludge images as moving images using a moving object detection method.

When the target is filamentous bacteria, the number of filamentous bacteria in the sludge image may be calculated by performing binarization processing and blob analysis on the sludge image. Specifically, blob regions in the binarized sludge image whose feature quantities (for example, area, circularity, ratio of height to width, maximum height, maximum width, and the like) satisfy extraction conditions set in advance are detected as filamentous bacteria, and the total number of detected filamentous bacteria is calculated.

When the target is flocs, the size (area) of the flocs may be calculated by performing binarization processing on the sludge image using a threshold value calculated by a predetermined method and extracting a blob region in the binarized image as flocs. As the size of the flocs, may be determined using a statistical value (for example, an average value, a total value, or a median value of the areas) obtained from a plurality of flocs included in a sludge image. Alternatively, the color of the flocs may be determined by applying a known color analysis method to the extracted floc region. In addition, sludge image information may be derived by using a different sludge image for each type of target microorganism.

Time-series data indicating the type and number of protozoa, the number of filamentous bacteria, and the size of flocs may be input to the learning model 121. In addition, the sludge image information may include the amount of change in the number of protozoa, the amount of change in the number of filamentous bacteria, the amount of change in floc size obtained from time-series data of the number of protozoa, the number of filamentous bacteria, and the floc size, and may include the trend in change in the number of protozoa, the trend in change in the number of filamentous bacteria, and the trend in change in floc size (for example, an increase or a decrease).

In addition, the sludge image information described above is an example, and various feature quantities obtained from sludge images can be used as the sludge image information. In addition, the sludge image information is not limited to including feature quantities based on the sludge image, but may be the sludge image itself. The sludge image information may include at least one of the condition of protozoa, the condition of filamentous bacteria, and the condition of flocs.

The output layer of the learning model 121 outputs estimation results of the type of the microbial agent and the addition amount of the microbial agent. The type of microbial agent is represented, for example, by the name of the microbial agent. The addition amount of the microbial agent may be a post-change addition amount, or may be an amount of change in the addition amount. The learning model 121 may output the estimation results of the addition amount for each of a plurality of types of microbial agents. The configuration of the output layer is not particularly limited as long as information regarding the type and amount of the microbial agent to be estimated can be obtained.

The learning model 121 can be generated by preparing training data, in which sludge image information obtained from past operating records is associated with the type and amount of the microbial agent used and performing machine learning on an untrained neural network using the training data. As correct values for the type and amount of the microbial agent, for example, addition conditions selected by a skilled operator are used.

An example of the contents of training data is shown below. An increase in the number of Colpoda, which is a relatively large protozoa, is assumed to be caused by an increase in ammonia concentration. Therefore, when the number of Colpoda is large, a microbial agent containing persistent substance-decomposing bacteria is associated as the type of the microbial agent. An increase in the number of filamentous bacteria is associated with a microbial agent containing sludge-decomposing bacteria as the type of microbial agent. In addition, an increase in the number of filamentous bacteria is assumed to be caused by a decrease in dissolved oxygen concentration. A decrease in dissolved oxygen concentration can cause the generation of odors from the treatment tank or the sedimentation tank. Therefore, when the number of filamentous bacteria is large, a microbial agent containing malodorous substance-decomposing bacteria is associated as the type of the microbial agent. A decrease in the size of the flocs means dispersion or disintegration of the flocs. Therefore, when the size of the flocs is small, a microbial agent containing settleability-improving bacteria is associated with the type of the microbial agent. The addition amount of the microbial agent can be appropriately set according to the volumes of the treatment tank 21 and the sedimentation tank 22 or the treatment flow rate.

The information processing apparatus 1 inputs the sludge image information included in the training data to the input layer of the learning model 121, and acquires the type and amount of the microbial agent output from the output layer after calculation processing in the intermediate layer. The information processing apparatus 1 compares the type and amount of the microbial agent output from the output layer with the type and amount of the microbial agent included in the training data, and optimizes parameters, such as weights (coupling coefficients) between neurons, so that the type and amount of the microbial agent output from the output layer approach correct values. The method for optimizing the parameters is not particularly limited. For example, the information processing apparatus 1 optimizes various parameters using an error backpropagation method. When the learning is completed, the information processing apparatus 1 stores definition information regarding the trained learning model 121 in the storage unit 12 as the trained learning model 121. In this manner, the learning model 121 is constructed that has been trained to be able to appropriately estimate the type and amount of the microbial agent from the sludge image information.

The learning model 121 is not limited to being generated and trained by the information processing apparatus 1. As the learning model 121, a trained model may be transmitted from by an external server to the information processing apparatus 1 and stored in the storage unit 12.

The configuration of the learning model 121 is not limited to the example shown in FIG. 4. The learning model 121 only needs to be able to identify the type and amount of a microbial agent from sludge image information. The learning model 121 may be, for example, a model based on other learning algorithms, such as a Transformer, a CNN (Convolutional Neural Network), an RNN (Recurrent Neural Network), an SVM (Support Vector Machine), and a decision tree.

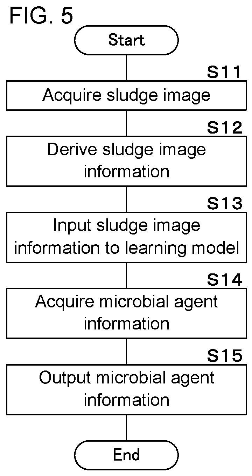

FIG. 5 is a flowchart showing an example of a processing procedure executed by the information processing apparatus 1. The processing in the following flowchart is executed by the control unit 11 in accordance with the computer program 1P stored in the storage unit 12 of the information processing apparatus 1. The control unit 11 repeatedly executes the following processing, for example, each time a new sludge image is captured by the camera 25.

The control unit 11 of the information processing apparatus 1 acquires a sludge image by receiving a sludge image of the wastewater treatment system 2 from the control device 3 (step S11). The control unit 11 stores the received sludge image in the storage unit 12. The sludge image is associated with identification information for identifying the control device 3 or the wastewater treatment system 2. In step S11, the control unit 11 may acquire the sludge image by reading the sludge image stored in the storage unit 12.

Based on the acquired sludge image, the control unit 11 derives sludge image information by using various image analysis methods (step S12). The sludge image information includes, for example, the type and number of protozoa, the number of filamentous bacteria, and the size of the flocs in the sludge image.

The control unit 11 inputs the derived sludge image information to the learning model 121 (step S13), and acquires microbial agent information output from the learning model 121 (step S14). The microbial agent information includes a microbial agent name indicating the type of the microbial agent and the addition amount of the microbial agent.

The control unit 11 outputs the acquired microbial agent information to the control device 3 (step S15). For example, the control unit 11 generates screen information indicating the estimation result of the microbial agent information, and transmits the generated screen information to the control device 3 identified by the identification information associated with the sludge image. The screen information may include, together with the microbial agent information, sludge image information obtained from the sludge image, that is, the type and number of protozoa, the number of filamentous bacteria, and the size of flocs.

The control unit 31 of the control device 3 receives the screen information transmitted from the information processing apparatus 1, and displays the received screen information on the display unit 34. The display unit 34 displays the names of one or more microbial agents to be added and the addition amounts of the microbial agents. The operator determines the conditions for adding the microbial agent based on the microbial agent information displayed on the display unit 34, and sets the addition conditions in the control device 3 using the operation unit 35. The control device 3 controls the wastewater treatment equipment 20 in accordance with the set addition conditions to add the microbial agent.

In the above-described processing, the information processing apparatus 1 may output the microbial agent information to a device (for example, a personal computer used by the operator) other than the control device 3 from which the sludge image is acquired.

In addition, the information processing apparatus 1 may transmit to the control device 3 an instruction to add a microbial agent corresponding to the acquired microbial agent information. The control device 3 causes the wastewater treatment equipment 20 to add the microbial agent in accordance with the instruction to add the microbial agent received from the information processing apparatus 1. According to the above configuration, the process from estimating the microbial agent information to adding the microbial agent can be automatically performed as a series of processes.

It is preferable that the information processing apparatus 1 adjusts the conditions for adding the microbial agent as needed by performing the above-described processing in real time. However, the information processing apparatus 1 may also be configured to perform the estimation processing collectively at predetermined intervals.

According to the present embodiment, appropriate microbial agent information can be estimated based on sludge images obtained by imaging the wastewater treatment system 2 and presented to the user. Since the quality or quantity of wastewater in the wastewater treatment system 2 changes on a daily basis, the ecosystem of microorganisms that make up the activated sludge contained in the wastewater also changes. It is not easy to grasp the condition of activated sludge, which is an aggregate of many types of microorganisms, and appropriately adjust the conditions for adding the microbial agent. According to the present embodiment, it is possible to estimate microbial agent information with high accuracy by using the learning model 121. Since it is possible to appropriately control the wastewater treatment system 2 without depending on the skill of the operator, the treatment performance of the wastewater treatment system 2 is improved, and accordingly, it is possible to stabilize its operation.

By using the sludge image information obtained from sludge images as input elements, the learning model 121 can estimate the microbial agent information with high accuracy while taking into account the condition of various microorganisms that have a significant influence on water quality.

(Second embodiment)

In a second embodiment, details of the explanatory variables and the objective variables of the learning model 121 are different from those in the first embodiment. In the following embodiments, differences from the first embodiment will mainly be described, and the same components as those in the first embodiment are denoted by the same reference numerals and detailed description thereof will be omitted.

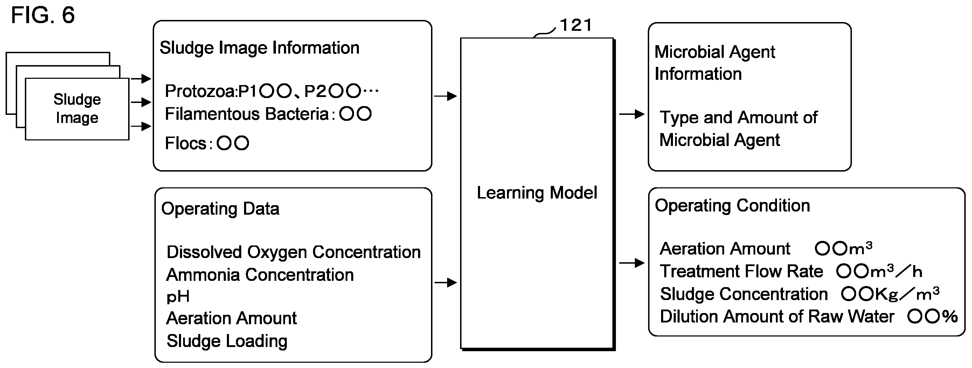

FIG. 6 is an explanatory diagram showing an overview of the learning model 121 according to the second embodiment. The learning model 121 according to the second embodiment receives sludge image information and operating data in the wastewater treatment system 2 as its input, and outputs microbial agent information and operating conditions for the wastewater treatment system 2. Except for the differences in the contents of the input information and output information, the configuration of the learning model 121 according to the second embodiment is the same as that of the learning model 121 according to the first embodiment, and therefore detailed explanation thereof will be omitted.

The operating data input to the learning model 121 is information indicating the operating state of the wastewater treatment system 2. The operating data includes, for example, detection data from the sensor 26 and setting values of the operating conditions set in the wastewater treatment equipment 20. The operating data may include values calculated from detection data and/or operating conditions. Examples of operating data include wastewater temperature, flow rate, pH, oxidation-reduction potential, dissolved oxygen concentration, sludge concentration, total organic carbon amount, ammonia concentration, nitrogen concentration, phosphorus concentration, the amount of aeration in the treatment tank 21, and sludge loading. The sludge loading is obtained by dividing a value, which is obtained by multiplying the BOD or TOC of the wastewater by the flow rate, by the sludge concentration in the treatment tank 21. In the example shown in FIG. 6, the operating data input to the learning model 121 includes the dissolved oxygen concentration, the ammonia concentration, the pH, the aeration amount, and the sludge loading.

The operating conditions output from the learning model 121 include one or more of the operating conditions described in the first embodiment and the change values of the operating conditions. The change values may be the setting values of the operating condition after the change, or may be the amounts of change in the setting values. In the example shown in FIG. 6, the operating conditions output from the learning model 121 include the aeration amount, the treatment flow rate, the sludge concentration, and the dilution amount of raw water. In addition, the output from the learning model 121 according to the second embodiment may be only microbial agent information.

As in the first embodiment, the learning model 121 is constructed by machine learning using training data in which sludge image information and operating data obtained from past operating records are associated with microbial agent information and operating conditions.

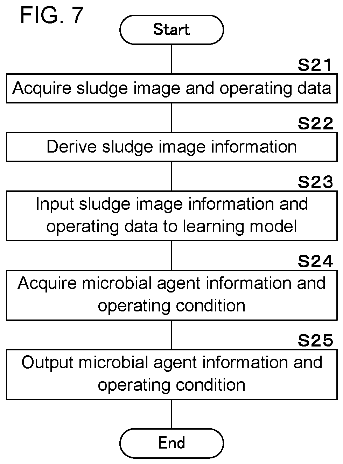

FIG. 7 is a flowchart showing an example of a processing procedure executed by the information processing apparatus 1 according to the second embodiment.

The control unit 11 of the information processing apparatus 1 acquires sludge images and operating data of the wastewater treatment system 2 (step S21). The control unit 11 acquires, through the control device 3, sludge images captured by the camera 25, detection data detected by various sensors 26, and setting values of the operating conditions held by the control device 3.

The control unit 11 derives sludge image information based on the acquired sludge images as in step S12 in the first embodiment (step S22).

The control unit 11 inputs the derived sludge image information and the acquired operating data to the learning model 121 (step S23), and acquires microbial agent information and operating conditions output from the learning model 121 (step S24). The control unit 11 outputs the acquired microbial agent information and operating conditions to the control device 3 (step S25), and ends the series of processes.

The control unit 31 of the control device 3 displays the microbial agent information and the operating conditions received from the information processing apparatus 1 on the display unit 34. The control unit 31 may automatically set the conditions for adding the microbial agent and the operating conditions in accordance with the microbial agent information and the operating conditions received from the information processing apparatus 1 and control the operation of the wastewater treatment equipment 20.

According to the present embodiment, it is possible to estimate the microbial agent information and the operating conditions by taking into consideration the operating state of the wastewater treatment system 2 in addition to the sludge image information. Since it is possible to accurately estimate microbial agent information and operating conditions that are suitable for the operating state of the wastewater treatment system 2, the treatment performance of the wastewater treatment system 2 is further improved. In addition, by presenting the operating conditions in addition to the microbial agent, the operation management of the wastewater treatment system 2 can be more appropriately supported.

(Third embodiment)

In a third embodiment, a configuration in which the learning model 121 is trained by reinforcement learning will be described.

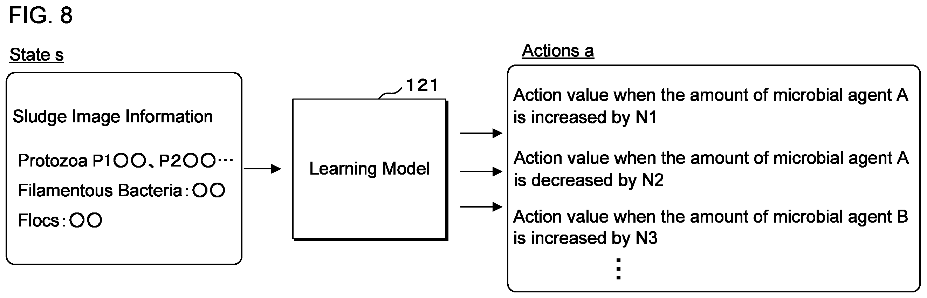

FIG. 8 is an explanatory diagram showing an overview of the learning model 121 according to the third embodiment. The learning model 121 according to the third embodiment learns microbial agent information corresponding to sludge image information through reinforcement learning. In the example shown in FIG. 8, the learning model 121 is a reinforcement learning model having a deep neural network, and is a DQN (Deep Q Network). The learning model 121 is a neural network model that outputs an action value for each of a plurality of actions a when a state s is input. The action a having a high action value represents appropriate microbial agent information.

The learning model 121 includes an input layer to which the state s is input, an output layer that outputs an action value $Q(s, a)$ of the action a in the input state s, and an intermediate layer that extracts the features of the state s.

The state s input to the learning model 121 includes sludge image information including the type and number of protozoa, the number of filamentous bacteria, and the size of flocs, as described above.

The output layer of the learning model 121 includes nodes respectively corresponding to a plurality of actions a. Each node outputs the action value $Q(s, a)$ for the action a corresponding to the node. The action a corresponds to a combination value of the type of microbial agent and the addition amount. By selecting the action node with the maximum action value based on the action value output from the learning model 121, the type and amount of the microbial agent corresponding to the sludge image information can be obtained.

The information processing apparatus 1 generates the learning model 121 through deep reinforcement learning using a predetermined data group. In reinforcement learning, sludge image information is treated as "state" and the type and amount of the microbial agent is treated as "action", and required "reward" is calculated to learn a Q value or a Q function (action value function) value.

An update equation of the action value function is expressed by the following Equation (1).

$$Q(s, a) \leftarrow Q(s, a) + \alpha(R + \gamma maxQ(s\_next, a\_next) - Q(s, a)) \cdots (1)$$

Where, s: state
a: action selected in state s
$\alpha$: learning coefficient
R: reward obtained as a result of action
$\gamma$: discount rate
maxQ(s_next, a_next): maximum value of the action value Q for actions that can be taken in the next state

The information processing apparatus 1 trains the learning model 121 by optimizing the parameters of the learning model 121 so that the second term on the right side of the above Equation (1) approaches zero using, for example, an error backpropagation method. That is, the parameters of the learning model 121 are updated so that the error between the expected value of the reward and the current action evaluation approaches zero.

The information processing apparatus 1 performs reinforcement learning based on reward, in which sludge image information before a change in microbial agent addition conditions is treated as the state s and the type and amount of the microbial agent after the change are treated as the action a. The reward is automatically calculated by the information processing apparatus 1 based on, for example, evaluation information indicating the evaluation result of the operating status of the wastewater treatment system 2.

The evaluation information may include evaluation results for one or more evaluation items selected from the amount of excess sludge reduction in the wastewater treatment system 2, the amount of greenhouse gas reduction, the degree of improvement in settleability, the degree of suppression of bulking, the amount of chemical reduction, the degree of improvement in treatment performance, the degree of reduction in odors, the degree of improvement in water quality, and the stability of operation. The information processing apparatus 1 calculates the reward so that the reward value increases as the deviation between the target value of each evaluation item described above and the actual evaluation value of the wastewater treatment system 2 decreases. When the deviation between the target value and the actual evaluation value is large, a zero reward or a negative reward is given. The calculation equation for calculating the reward is not particularly limited.

The information processing apparatus 1 trains the learning model 121 based on the sludge image information input to the learning model 121, the action value Q output when each state variable is input, and the calculated reward. Using the above Equation (1), the information processing apparatus 1 learns the parameters of the learning model 121 so as to maximize the reward.

In addition, the reinforcement learning method of the learning model 121 is not limited. The learning model 121 may be configured to adjust the microbial agent information using a map in which state quantities are associated with action values. In addition, in reinforcement learning of the learning model 121, the parameters of the learning model 121 may be adjusted using a simulator or a small-scale apparatus (lab scale) in a laboratory or the like, and then the learning model 121 after parameter adjustment may be deployed to an actual environment.

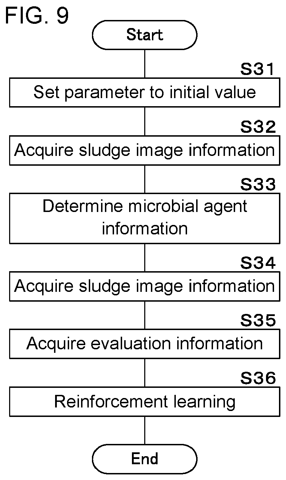

FIG. 9 is a flowchart showing an example of a processing procedure related to reinforcement learning executed by the information processing apparatus 1 according to the third embodiment.

The control unit 11 of the information processing apparatus 1 sets the parameters of the learning model 121 to initial values (step S31).

The control unit 11 acquires, through the control device 3, sludge image information including the type and number of protozoa, the number of filamentous bacteria, and the size of flocs obtained from the sludge images (step S32). The sludge image information corresponds to the state s.

Based on the acquired sludge image information, the control unit 11 determines microbial agent information including the type and amount of the microbial agent (step S33). The microbial agent information corresponds to the action a. The control unit 11 selects an action a that can be taken in the state s.

The control unit 11 acquires sludge image information based on the state obtained as a result of the action a, that is, a sludge image obtained after the microbial agent has been added in accordance with the determined microbial agent information (step S34). Specifically, the control unit 11 outputs the microbial agent information determined in step S33 to the control device 3, and acquires a sludge image after the microbial agent has been added to the wastewater treatment system 2 in accordance with the output microbial agent information, thereby acquiring sludge image information based on the sludge image.

The control unit 11 acquires evaluation information in the wastewater treatment system 2 after the microbial agent has been added in accordance with the determined microbial agent information (step S35). The evaluation information is obtained by measuring or evaluating each evaluation item in the wastewater treatment system 2.

The control unit 11 executes reinforcement learning processing of the learning model 121 (step S36). Specifically, the control unit 11 calculates a reward R based on the acquired evaluation information, and learns (updates) the parameters of the learning model 121 so that the current Q value becomes the maximum reward, which can be obtained among the actions that can be taken in the next state, using the above Equation (1). The information processing apparatus 1 executes a loop process of repeating steps S32 to S35 as necessary. When the learning is completed, the information processing apparatus 1 stores definition information regarding the trained learning model 121 in the storage unit 12 as the trained learning model 121. The information processing apparatus 1 may end the learning, for example, when parameter updates have been performed a predetermined number of times.

The information processing apparatus 1 according to the third embodiment estimates microbial agent information corresponding to sludge image information using the above-described learning model 121 trained by reinforcement learning. Details of the estimation processing using the learning model 121 are the same as those in the first embodiment.

According to the present embodiment, since the learning model 121 can be constructed by reinforcement learning, the generation of training data is not required, thereby reducing the burden required to construct the learning model 121. In the wastewater treatment system 2, the condition of which changes due to various factors, it is not easy to define evaluation criteria for the effect of adding a microbial agent. According to the present embodiment, by using the evaluation information indicating the evaluation of the operating state of the wastewater treatment system 2, it is possible to efficiently calculate the reward to be used for learning.

(Fourth embodiment)

In a fourth embodiment, details of the explanatory variables and the objective variables of the learning model 121 trained by reinforcement learning are different from those in the third embodiment.

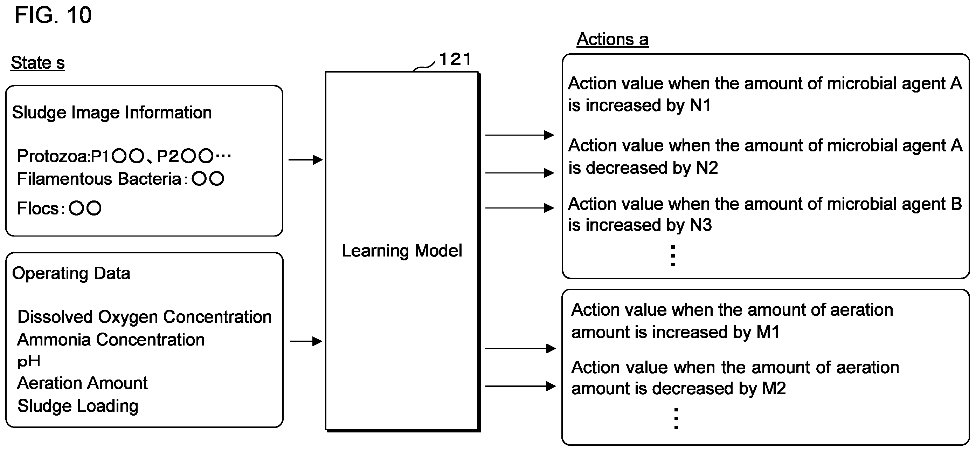

FIG. 10 is an explanatory diagram showing an overview of the learning model 121 according to the fourth embodiment. The learning model 121 according to the fourth embodiment is a DQN, as in the third embodiment. The state s input to the learning model 121 according to the fourth embodiment includes sludge image information and operating data. The action a in the output layer of the learning model 121 includes the type and amount of the microbial agent and operating conditions. In addition, the action a in the output layer of the learning model 121 according to the fourth embodiment may be configured to include only the type and amount of the microbial agent (microbial agent information).

Except for differences in the contents of the input information and the output information, the configuration and learning method of the learning model 121 according to the fourth embodiment are the same as those of the learning model 121 according to the third embodiment, and accordingly, detailed description thereof will be omitted. However, the information processing apparatus 1 performs reinforcement learning of the learning model 121 so that the reward is maximized based on the reward calculated from the evaluation information described above.

The information processing apparatus 1 according to the fourth embodiment estimates microbial agent information and operating conditions corresponding to sludge image information and operating data by using the above-described learning model 121 trained by reinforcement learning. Details of the estimation processing using the learning model 121 are the same as those in the second embodiment.

(Fifth embodiment)

In a fifth embodiment, a configuration for deploying a learning model to the control device 3 will be described.

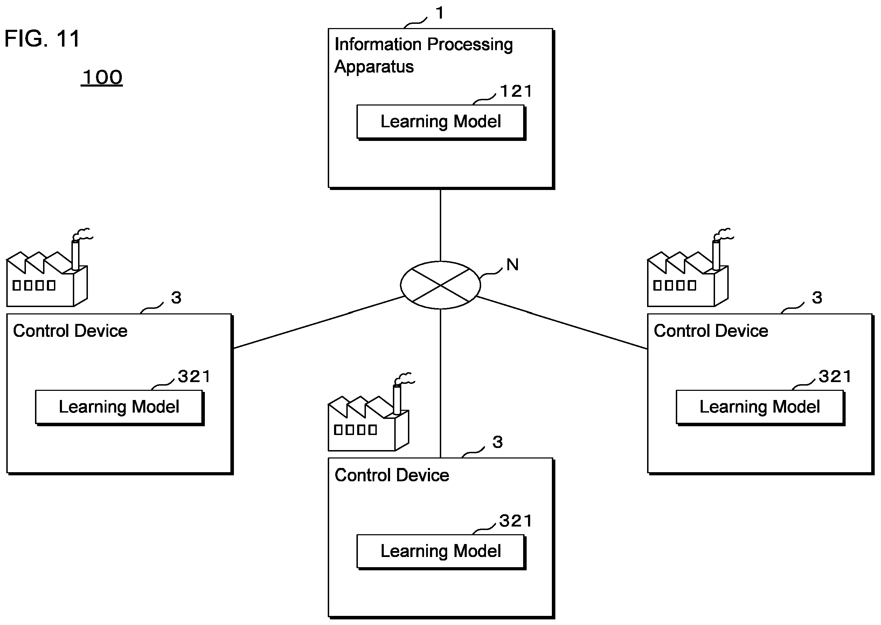

FIG. 11 is a diagram showing the configuration of a management system 100 according to the fifth embodiment. An information processing apparatus 1 according to the fifth embodiment is communicably connected to control devices 3 in a plurality of wastewater treatment systems 2. In FIG. 11, for the sake of simplicity of drawings, the wastewater treatment equipment 20, the information processing apparatus 1, the control unit of the control device 3, and the like are omitted.

As shown in FIG. 11, in the management system 100 according to the fifth embodiment, the learning model 121 generated and trained by the information processing apparatus 1 is deployed to each control device 3 and stored in the storage unit 32 of the control device 3. Hereinafter, the learning model stored in the storage unit 32 of the control device 3 will be referred to as a learning model 321 in order to distinguish it from the learning model 121 stored in the information processing apparatus 1. Hereinafter, as an example, the learning model 121 will be described as one that receives sludge image information as its input and outputs microbial agent information. However, the learning model 121 according to the present embodiment may be any of the learning models 121 described in the embodiments described above.

The control device 3 can re-train the learning model 321 in each control device 3 by using sludge images and the like obtained from the wastewater treatment system 2 controlled by the device itself.

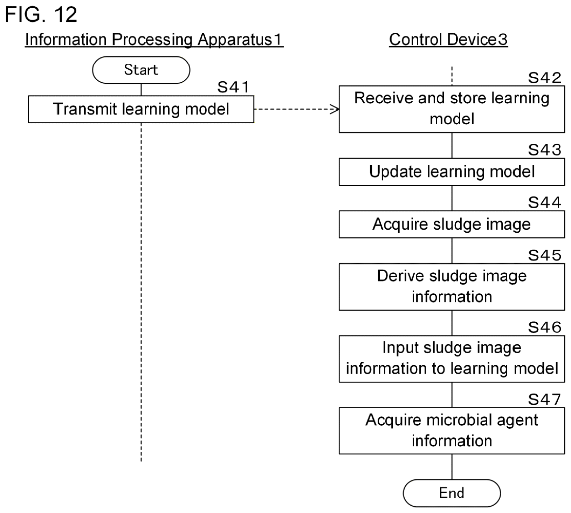

FIG. 12 is a flowchart showing an example of a processing procedure executed by the management system 100 according to the fifth embodiment. The processing in the flowchart of FIG. 12 is executed by the control unit 11 in accordance with the computer program 1P stored in the storage unit 12 of the information processing apparatus 1 and executed by the control unit 31 in accordance with the computer program 3P stored in the storage unit 32 of the control device 3.

The control unit 11 of the information processing apparatus 1 transmits the constructed trained learning model 121 to the control device 3 (step S41).

The control unit 31 of the control device 3 receives the learning model 321 from the information processing apparatus 1 and stores the received learning model 321 in the storage unit 32 (step S42). Through the above-described processing, the learning model 321 is deployed to the control device 3.

The control unit 31 updates the learning model 321 by re-learning the learning model 321 using sludge images and the like obtained from the wastewater treatment system 2 (step S43). When performing supervised learning, the control unit 31 acquires training data including sludge image information based on sludge images newly obtained in the wastewater treatment system 2 and microbial agent information related to the microbial agent to be used in the wastewater treatment system 2. The control unit 31 fine-tunes the learning model 321 based on the acquired training data. Details of the learning method of the learning model 321 are the same as those in the first embodiment.

In steps S44 to S47, the control unit 31 executes the same processing as in steps S11 to S14 in the first embodiment, thereby estimating microbial agent information using the updated learning model 321.

In step S43, when unsupervised learning is performed, the control unit 31 acquires sludge image information based on sludge images newly obtained in the wastewater treatment system 2, microbial agent information related to the microbial agent to be used in the wastewater treatment system 2, and evaluation information for predetermined evaluation items. Using a reward corresponding to the acquired evaluation information, the control unit 31 performs reinforcement learning of the learning model 321 so that the reward increases. Details of the learning method of the learning model 321 are the same as those in the third embodiment.

Each control device 3 in the management system 100 updates (adjusts) various parameters of the learning model 321 deployed to the device itself by executing the above-described processing.

In the above-described processing, the generation of training data and the reward calculation processing may be executed on the information processing apparatus 1 side.

According to the present embodiment, since the learning model 321 can be updated using the data in each individual wastewater treatment system 2, the learning model 321 can be customized for each wastewater treatment system 2. Therefore, it is possible to improve the estimation accuracy of the learning model 321.

(Sixth embodiment)

In a sixth embodiment, a configuration will be described in which federated learning is performed based on update parameters of the learning model 321 deployed to each control device 3.

In a management system 100 according to the sixth embodiment, as described in the fifth embodiment, the learning model 121 generated and trained by the information processing apparatus 1 is deployed to each control device 3 and stored in the storage unit 32 of the control device 3. In addition, fine tuning or reinforcement learning of the learning model 321 is performed in each control device 3, thereby updating various parameters of the learning model 321.

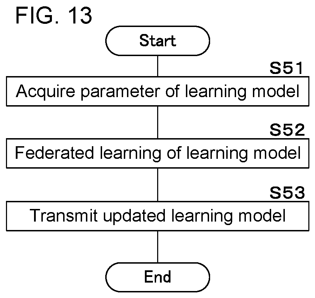

FIG. 13 is a flowchart showing an example of a processing procedure executed by the information processing apparatus 1 according to the sixth embodiment.

The control unit 11 of the information processing apparatus 1 acquires parameters of each learning model 321 after update from each of the plurality of control devices 3 (step S51). The control unit 11 performs federated learning of the learning model 121 based on the parameters related to each learning model 321 (step S52), and updates the learning model 121. In federated learning, parameters trained by individual local computers are aggregated and trained in the information processing apparatus 1 on the cloud, thereby improving the accuracy of the learning model 121. The information processing apparatus 1 performs federated learning, for example, by calculating a simple average of a plurality of parameters acquired from the respective control devices 3 or by calculating a weighted average so that a larger weight is given to the learning model 321 having higher accuracy or the learning model 321 having a larger amount of learning.

The control unit 11 transmits the updated learning model 121 to each of the plurality of control devices 3 (step S53), and deploys the updated learning model 121 to each control device 3.

According to the present embodiment, the estimation accuracy of the learning model 321 can be improved through the operation of the management system 100.

Regarding the above-described embodiments, the following supplementary notes are further disclosed.

(Supplementary Note 1)

A computer program causing a computer to execute processing of: acquiring sludge image information related to a sludge image of a wastewater treatment system using an activated sludge method; and inputting the acquired sludge image information to a model, which outputs microbial agent information related to a microbial agent to be used in a wastewater treatment system when sludge image information of the wastewater treatment system is input, to output microbial agent information.

(Supplementary Note 2)

The computer program according to supplementary note 1, wherein the sludge image information includes at least one of a condition of protozoa, a condition of filamentous bacteria, and a condition of flocs obtained from the sludge image.

(Supplementary Note 3)

The computer program according to supplementary note 1 or 2, wherein the microbial agent information includes a type and an amount of the microbial agent.

(Supplementary Note 4)

The computer program according to any one of supplementary notes 1 to 3 causing the computer to further execute processing of: acquiring operating data of the wastewater treatment system; and inputting the acquired sludge image information and the operating data to the model, which outputs microbial agent information related to a microbial agent to be used in a wastewater treatment system when sludge image information and operating data of the wastewater treatment system are input, to output the microbial agent information.

(Supplementary Note 5)

The computer program according to any one of supplementary notes 1 to 4, wherein the acquired sludge image information is input to the model, which outputs microbial agent information related to a microbial agent to be used in a wastewater treatment system and operating conditions in the wastewater treatment system when sludge image information of the wastewater treatment system is input, to output the microbial agent information and operating conditions.

(Supplementary Note 6)

The computer program according to any one of supplementary notes 1 to 5 causing the computer to further execute processing of: acquiring evaluation information indicating an evaluation result of an operating status of the wastewater treatment system; and performing reinforcement learning of the model using a reward corresponding to the acquired evaluation information so that the reward is increased.

(Supplementary Note 7)

The computer program according to supplementary note 6, wherein, with the sludge image information including at least one of a condition of protozoa, a condition of filamentous bacteria, and a condition of flocs obtained from the sludge image as a state and microbial agent information including a type and an amount of a microbial agent as an action, the model is subjected to reinforcement learning so that the reward corresponding to the evaluation information is increased.

(Supplementary Note 8)

An information processing apparatus, including: a control unit that executes processing of acquiring sludge image information related to a sludge image of a wastewater treatment system using an activated sludge method and inputting the acquired sludge image information to a model, which outputs microbial agent information related to a microbial agent to be used in a wastewater treatment system when sludge image information of the wastewater treatment system is input, to output microbial agent information.

(Supplementary Note 9)

An information processing method in which a computer executes processing of: acquiring sludge image information related to a sludge image of a wastewater treatment system using an activated sludge method; and inputting the acquired sludge image information to a model, which outputs microbial agent information related to a microbial agent to be used in a wastewater treatment system when sludge image information of the wastewater treatment system is input, to output microbial agent information.

(Supplementary Note 10)

An information processing method, including: deploying a model, which outputs microbial agent information related to a microbial agent to be used in a wastewater treatment system when sludge image information of the wastewater treatment system using an activated sludge method is input, to a computer that controls the wastewater treatment system; acquiring sludge image information related to a sludge image of the wastewater treatment system; and inputting the acquired sludge image information to the deployed model to output microbial agent information.

(Supplementary Note 11)

The information processing method according to supplementary note 10, further including: acquiring training data including sludge image information newly obtained in the wastewater treatment system and microbial agent information related to a microbial agent to be used in the wastewater treatment system; and adjusting the model based on the acquired training data.

(Supplementary Note 12)

The information processing method according to supplementary note 10 or 11, further including: acquiring evaluation information indicating an evaluation result of an operating status of the wastewater treatment system; and performing reinforcement learning of the model using a reward corresponding to the acquired evaluation information so that the reward is increased.

(Supplementary Note 13)

An information processing method, including: deploying a model, which outputs microbial agent information related to a microbial agent to be used in a wastewater treatment system when sludge image information of the wastewater treatment system using an activated sludge method is input, to each of a plurality of computers that control each wastewater treatment system; collecting, from each of the plurality of computers, parameters of each model in each wastewater treatment system that have been adjusted based on a data group including sludge image information newly obtained in each wastewater treatment system and microbial agent information related to a microbial agent to be used in each wastewater treatment system; performing federated learning of the model based on the collected parameters of each model; and deploying the model after federated learning to each of the plurality of computers.

The embodiments disclosed herein should be considered as illustrative in all respects and not restrictive. The technical features described in the respective embodiments can be combined with each other, and it is intended that the scope of the present invention includes all modifications within the scope of the claims and equivalents thereof.

The sequences shown in the respective embodiments are not limited, and as long as there is no contradiction, each processing procedure may be executed in a different order, and a plurality of processes may be executed in parallel. The entity that performs each process is not limited, and the processing of each device may be executed by another device as long as there is no contradiction.

The features described in the respective embodiments can be combined with each other. In addition, the independent claims and the dependent claims described in the claims can be combined with each other in all combinations, regardless of the citation form. In addition, although the form of multiple claims that cite two or more other claims (multi-claim form) is used in the scope of claims, the present invention is not limited thereto. A form of multi-claim (multiple claim) that cites at least one multi-claim can also be used.

Reference Signs List

100    management system

**EP 4 755 854 A1**

1 information processing apparatus
11 control unit
12 storage unit
13 communications unit
121 learning model
1P computer program
1A recording medium
2 wastewater treatment system
3 control device
31 control unit
32 storage unit
33 communication unit
34 display unit
35 operation unit
3P computer program
3A recording medium
321 learning model

**Claims**

1. A computer program causing a computer to execute processing of:

   acquiring sludge image information related to a sludge image of a wastewater treatment system using an activated sludge method; and
   inputting the acquired sludge image information to a model, which outputs microbial agent information related to a microbial agent to be used in a wastewater treatment system when sludge image information of the wastewater treatment system is input, to output microbial agent information.

2. The computer program according to claim 1,
   wherein the sludge image information includes at least one of a condition of protozoa, a condition of filamentous bacteria, and a condition of flocs obtained from the sludge image.

3. The computer program according to claim 1 or 2,
   wherein the microbial agent information includes a type and an amount of the microbial agent.

4. The computer program according to any one of claims 1 to 3, the program causing the computer to further execute processing of:

   acquiring operating data of the wastewater treatment system; and
   inputting the acquired sludge image information and the operating data to the model, which outputs microbial agent information related to a microbial agent to be used in a wastewater treatment system when sludge image information and operating data of the wastewater treatment system are input, to output the microbial agent information.

5. The computer program according to any one of claims 1 to 4,
   wherein the acquired sludge image information is input to the model, which outputs microbial agent information related to a microbial agent to be used in a wastewater treatment system and operating conditions in the wastewater treatment system when sludge image information of the wastewater treatment system is input, to output the microbial agent information and operating conditions.

6. The computer program according to any one of claims 1 to 5, the program causing the computer to further execute processing of:

   acquiring evaluation information indicating an evaluation result of an operating status of the wastewater treatment system; and
   performing reinforcement learning of the model using a reward corresponding to the acquired evaluation information so that the reward is increased.

**7.** The computer program according to claim 6,
wherein, with the sludge image information including at least one of a condition of protozoa, a condition of filamentous bacteria, and a condition of flocs obtained from the sludge image as a state and microbial agent information including a type and an amount of a microbial agent as an action, the model is subjected to reinforcement learning so that the reward corresponding to the evaluation information is increased.

**8.** An information processing apparatus, comprising:
a control unit that executes processing of acquiring sludge image information related to a sludge image of a wastewater treatment system using an activated sludge method and inputting the acquired sludge image information to a model, which outputs microbial agent information related to a microbial agent to be used in a wastewater treatment system when sludge image information of the wastewater treatment system is input, to output microbial agent information.

**9.** An information processing method in which a computer executes processing of:

acquiring sludge image information related to a sludge image of a wastewater treatment system using an activated sludge method; and
inputting the acquired sludge image information to a model, which outputs microbial agent information related to a microbial agent to be used in a wastewater treatment system when sludge image information of the wastewater treatment system is input, to output microbial agent information.

**10.** An information processing method, comprising:

deploying a model, which outputs microbial agent information related to a microbial agent to be used in a wastewater treatment system when sludge image information of the wastewater treatment system using an activated sludge method is input, to a computer that controls the wastewater treatment system;
acquiring sludge image information related to a sludge image of the wastewater treatment system; and
inputting the acquired sludge image information to the deployed model to output microbial agent information.

**11.** The information processing method according to claim 10, further comprising:

acquiring training data including sludge image information newly obtained in the wastewater treatment system and microbial agent information related to a microbial agent to be used in the wastewater treatment system; and
adjusting the model based on the acquired training data.

**12.** The information processing method according to claim 10 or 11, further comprising:

acquiring evaluation information indicating an evaluation result of an operating status of the wastewater treatment system; and
performing reinforcement learning of the model using a reward corresponding to the acquired evaluation information so that the reward is increased.

**13.** An information processing method, comprising:

deploying a model, which outputs microbial agent information related to a microbial agent to be used in a wastewater treatment system when sludge image information of the wastewater treatment system using an activated sludge method is input, to each of a plurality of computers that control each wastewater treatment system;
collecting, from each of the plurality of computers, parameters of each model in each wastewater treatment system that have been adjusted based on a data group including sludge image information newly obtained in each wastewater treatment system and microbial agent information related to a microbial agent to be used in each wastewater treatment system;
performing federated learning of the model based on the collected parameters of each model; and
deploying the model after federated learning to each of the plurality of computers.

FIG. 1

FIG. 2

Information Processing Apparatus 1

Control Unit 11

Storage Unit 12

Program 1P

Learning Model 121

Communication Unit 13

1A

FIG. 3

FIG. 4

FIG. 5

```
      ┌─────────────┐
      │    Start     │
      └──────┬──────┘
             │          S11
   ┌─────────┴─────────┐
   │ Acquire sludge image │
   └─────────┬─────────┘
             │          S12
   ┌─────────┴─────────┐
   │  Derive sludge image │
   │     information      │
   └─────────┬─────────┘
             │          S13
   ┌─────────┴─────────┐
   │  Input sludge image  │
   │ information to learning model │
   └─────────┬─────────┘
             │          S14
   ┌─────────┴─────────┐
   │ Acquire microbial agent │
   │     information      │
   └─────────┬─────────┘
             │          S15
   ┌─────────┴─────────┐
   │ Output microbial agent │
   │     information      │
   └─────────┬─────────┘
             │
      ┌──────┴──────┐
      │     End      │
      └─────────────┘
```

# FIG. 6

**Sludge Image** →

**Sludge Image Information**

Protozoa:P1○○、P2○○···
Filamentous Bacteria：○○

Flocs：○○

**Operating Data**

Dissolved Oxygen Concentration
Ammonia Concentration
pH
Aeration Amount
Sludge Loading

→

**Learning Model** `⌐121`

→

**Microbial Agent Information**

Type and Amount of Microbial Agent

→

**Operating Condition**

Aeration Amount　○○m³
Treatment Flow Rate　○○m³／h
Sludge Concentration　○○Kg／m³
Dilution Amount of Raw Water　○○%

EP 4 755 854 A1

FIG. 7

```
              ( Start )
                  |
                           S21
  Acquire sludge image and operating data
                  |
                           S22
      Derive sludge image information
                  |
                           S23
      Input sludge image information and
        operating data to learning model
                  |
                           S24
     Acquire microbial agent information and
              operating condition
                  |
                           S25
     Output microbial agent information and
              operating condition
                  |
              ( End )
```

# FIG. 8

State s

Sludge Image Information

Protozoa P1○○、P2○○…

Filamentous Bacteria:○○

Flocs:○○

~121

Learning Model

Actions a

Action value when the amount of microbial agent A is increased by N1

Action value when the amount of microbial agent A is decreased by N2

Action value when the amount of microbial agent B is increased by N3

⋮

EP 4 755 854 A1

FIG. 9

```
        ( Start )
            |
           S31
| Set parameter to initial value |
            |
           S32
| Acquire sludge image information |
            |
           S33
| Determine microbial agent
         information |
            |
           S34
| Acquire sludge image information |
            |
           S35
| Acquire evaluation information |
            |
           S36
| Reinforcement learning |
            |
         ( End )
```

# FIG. 10

**State s**

Sludge Image Information

Protozoa:P1○○、P2○○⋯
Filamentous Bacteria:○○

Flocs:○○

Operating Data

Dissolved Oxygen Concentration
Ammonia Concentration
pH
Aeration Amount
Sludge Loading

Learning Model  ⌇121

**Actions a**

Action value when the amount of microbial agent A is increased by N1

Action value when the amount of microbial agent A is decreased by N2

Action value when the amount of microbial agent B is increased by N3

⋮

Action value when the amount of aeration amount is increased by M1

Action value when the amount of aeration amount is decreased by M2

⋮

EP 4 755 854 A1

FIG. 11

<u>100</u>

Information Processing Apparatus `1`

Learning Model `121`

N

Control Device `3`

Learning Model `321`

Control Device `3`

Learning Model `321`

Control Device `3`

Learning Model `321`

EP 4 755 854 A1

## FIG. 12

Information Processing Apparatus 1          Control Device 3

```
        ( Start )
                              S41
   | Transmit learning model | ----------> 
```

S42
| Receive and store learning model |

S43
| Update learning model |

S44
| Acquire sludge image |

S45
| Derive sludge image information |

S46
| Input sludge image information to learning model |

S47
| Acquire microbial agent information |

( End )

FIG. 13

```
        ┌─────────┐
        │  Start  │
        └─────────┘
             │
                                    S51
┌─────────────────────────────────────┐
│ Acquire parameter of learning model  │
└─────────────────────────────────────┘
             │
                                    S52
┌─────────────────────────────────────┐
│  Federated learning of learning model │
└─────────────────────────────────────┘
             │
                                    S53
┌─────────────────────────────────────┐
│   Transmit updated learning model     │
└─────────────────────────────────────┘
             │
        ┌─────────┐
        │   End   │
        └─────────┘
```

**EP 4 755 854 A1**

## INTERNATIONAL SEARCH REPORT

| | International application No. |
|---|---|
| | **PCT/JP2024/027312** |

| **A. CLASSIFICATION OF SUBJECT MATTER** |
|---|
| ***C02F 3/12***(2023.01)i; ***G06Q 50/06***(2024.01)i<br>FI:  C02F3/12 Z; G06Q50/06 |
| According to International Patent Classification (IPC) or to both national classification and IPC |

| **B. FIELDS SEARCHED** |
|---|
| Minimum documentation searched (classification system followed by classification symbols)<br>C02F3/00-3/34; G06Q50/00-50/20; G06Q50/26-99/00; G16Z99/00 |
| Documentation searched other than minimum documentation to the extent that such documents are included in the fields searched<br>Published examined utility model applications of Japan 1922-1996<br>Published unexamined utility model applications of Japan 1971-2024<br>Registered utility model specifications of Japan 1996-2024<br>Published registered utility model applications of Japan 1994-2024 |
| Electronic data base consulted during the international search (name of data base and, where practicable, search terms used) |

| **C.** | **DOCUMENTS CONSIDERED TO BE RELEVANT** | |
|---|---|---|
| Category* | Citation of document, with indication, where appropriate, of the relevant passages | Relevant to claim No. |
| A | WO 2010/004938 A1 (SEIKO PMC CORP.) 14 January 2010 (2010-01-14)<br>claims, paragraph [0017], examples | 1-13 |
| A | JP 2000-210692 A (AGENCY OF IND SCIENCE & TECHNOL) 02 August 2000<br>(2000-08-02)<br>claims, paragraph [0022] | 1-13 |
| A | JP 2017-064666 A (FUJI ELECTRIC CO., LTD.) 06 April 2017 (2017-04-06)<br>claims, paragraph [0026] | 1-13 |
| A | JP 3-012232 A (HITACHI, LTD.) 21 January 1991 (1991-01-21)<br>claims | 1-13 |
| A | CN 112079430 A (GUANGZHOU JUE TECHNOLOGY CO., LTD.) 15 December 2020<br>(2020-12-15)<br>claims, paragraphs [0028]-[0040] | 1-13 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 September 2024** | **08 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

30

## INTERNATIONAL SEARCH REPORT
### Information on patent family members

International application No.

**PCT/JP2024/027312**

| Patent document cited in search report | | | Publication date (day/month/year) | Patent family member(s) | | | Publication date (day/month/year) |
|---|---|---|---|---|---|---|---|
| WO | 2010/004938 | A1 | 14 January 2010 | US | 2011/0100903 | A1 | |
| | | | | claims, paragraphs [0037]-[0041], examples | | | |
| | | | | CN | 102089440 | A | |
| JP | 2000-210692 | A | 02 August 2000 | JP | 2000-51886 | A | |
| JP | 2017-064666 | A | 06 April 2017 | (Family: none) | | | |
| JP | 3-012232 | A | 21 January 1991 | (Family: none) | | | |
| CN | 112079430 | A | 15 December 2020 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018103113 A